(19)

**Europäisches Patentamt**
**European Patent Office**
**Office européen des brevets**

(11) **EP 1 068 923 B1**

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(51) Int Cl.:
*B23K 26/06* (2006.01)     *B23K 26/067* (2006.01)
*B23K 26/073* (2006.01)

(21) Anmeldenummer: **00810552.0**

(22) Anmeldetag: **23.06.2000**

(54) **Verfahren zur Erzeugung einer Intensitätsverteilung über einen Arbeitslaserstrahl sowie Vorrichtung hierzu**

Process for obtaining an intensity repartition on a working laser beam as an apparatus therefor

Procédé pour obtenir une répartition d'intensité sur un faisceau laser de travail ainsi qu'un appareil pour celà

(84) Benannte Vertragsstaaten:
**CH DE IT LI**

(30) Priorität: **12.07.1999 EP 99810623**

(43) Veröffentlichungstag der Anmeldung:
**17.01.2001 Patentblatt 2001/03**

(73) Patentinhaber: **MDC Max Dätwyler AG Bleienbach**
**3368 Bleienbach (CH)**

(72) Erfinder:
• **Hennig, Guido, Dr.**
**4923 Wynau (CH)**

• **Dätwyler, Max**
**3368 Bleienbach (CH)**

(74) Vertreter: **Roshardt, Werner Alfred**
**Keller & Partner**
**Patentanwälte AG**
**Schmiedenplatz 5**
**Postfach**
**3000 Bern 7 (CH)**

(56) Entgegenhaltungen:
**EP-A- 0 300 465        EP-A- 0 308 512**
**EP-A- 0 338 816        WO-A-97/19783**
**DE-A- 4 212 390        US-A- 4 958 900**
**US-A- 5 779 753        US-A- 5 856 648**

## Beschreibung

Die Erfindung betrifft ein Verfahren gemäß dem Oberbegriff des Patentanspruchs 1 sowie eine Vorrichtung gemäß dem Oberbegriff des Patentanspruchs 10.

## Stand der Technik

Die Intensitätsverteilung eines Materialbearbeitungslaserstrahls auf einer Werkzeugoberfläche wurde bislang mit Fokussierlinsen unterschiedlicher Brennweite eingestellt. Die Abbildung von Laserstrahlen lässt sich mit der Gaußschen Strahlentheorie beschreiben. Vereinfacht kann hier gesagt werden: Je breiter ein auf eine Fokussierlinse treffender kollimierter Laserstrahl ist, desto kleiner ist sein Fokusdurchmesser und desto kürzer ist seine Fokussiertiefe. Die Intensitätsverteilung auf einer zu bearbeitenden Werkzeugoberfläche wurde somit bisher durch eine geeignete Auswahl einer Fokussierlinse mit einer entsprechenden vorgängigen Strahlaufweitung eingestellt.

Durch eine geeignete Wahl von sog. Modenblenden am "richtigen" Ort im Laserresonator wurde zudem der erzeugte Lasermode verändert. Eine Modenblende mit einem kleinen Querschnitt ergab einen Grundmode, während Modenblenden mit einer großen Öffnung einen breiten Multimodestrahl ergaben.

Wurden hohe Leistungen verwendet, wurden Laserstrahlen mehrerer Laser übereinander liegend zusammengeführt. In der EP 0 308 512 A1 werden vier eigenständige Laser mit je einem internen Güteschalter verwendet. Die jeweils aus einem Lasergerät austretenden Quellenstrahlen werden mittels Beam-Expandern derart geformt, dass sich unterschiedliche Divergenzwinkel ergeben. Die derart geformten Strahlen werden über Prismen und verstellbare Umlenkspiegel auf benachbarte Orte auf einer Druckwalze zur Materialabtragung abgebildet.

Mit den Beam-Expandern erfolgt ein Aufweiten bzw. Verkleinern eines Strahldurchmessers des betreffenden Teilstrahls. Bei einem dann anschliessenden durch eine Linse fokussierten Strahl ändern sich in Anhängigkeit der Strahlaufweitung bzw. -verkleinerung dessen Fokusdurchmesser und dessen Tiefenschärfe. Was sich hingegen durch die Verwendung eines Beam-Expanders nicht ändert, ist der Modenzustand des Strahls bzw. Strahlprofils: Ein Gausstrahl nullter Ordnung [00] bleibt erhalten, ebenso höhere Moden.

Sollte eine schnelle Intensitätsänderung vorgenommen werden, so konnte unter Verwendung optischer Schaltelemente wie einer Pockelszelle (elektro-optischer Effekt), einem Faraday-Rotator (magneto-optischer Effekt) oder durch akusto-optische Modulatoren nur die gesamte eingestrahlte Leistung verändert werden. Hierbei erfolgte jedoch nur eine Dämpfung über den gesamten Strahlquerschnitt. Die relative Intensitätsverteilung über den fokussierten Strahlquerschnitt blieb somit, abgesehen von Beugungseffekten und räumlichen Verzerrungen, erhalten. Die Intensitätsverteilung bestand aus einem numerischen Faktor und einer Ortsfunktion [$I = a \cdot f(x,y)$], wobei bei den bekannten Verfahren nur der numerische Faktor [$a$] änderbar war.

Um Laserpulse gleicher Energie und Pulsform zu erhalten, weist die EP 0 338 816 A2 einen periodischen Q-switch-Laser auf. Die Q-switch-Pulse eines einzigen Quellenstrahls werden mittels teildurchlässiger Spiegel in drei Teilstrahlen aufgeteilt. Jeder Teilstrahl durchläuft zur Nivelierung der Pulshöhen einen optischen Modulator. Anschliessend werden diese drei Teilstrahlen mit "eingestellten" Pulshöhen über Umlenkspiegel und eine Fokussieroptik zu drei nebeneinander liegenden Orten zur Erhöhung der Bearbeitungsgeschwindigkeit auf einen Druckzylinder 1 geführt.

## Aufgabe der Erfindung

Aufgabe der Erfindung ist es, ein Verfahren sowie eine Vorrichtung zu schaffen, mit dem bzw. mit der die Kurvenform einer Intensitätsverteilung über den Querschnitt eines Laserstrahls (Strahlprofil) am Bearbeitungsort schnell, d.h. mit Schaltzeiten bis zu Submikrosekunden, änderbar ist. Eine Veränderung des Strahlprofils ist lediglich durch eine Dämpfung des gesamten Materialbearbeitungstrahles nicht erreichbar; dies würde nämlich wieder bis auf Beugungseffekte und Verzerrungen das gleiche Strahlprofil ergeben. Aufgabe der Erfindung ist es, bei der Intensitätsverteilung über den Strahlquerschnitt nicht mehr nur den numerischen Faktor, sondern auch den Funktionswert zu ändern:

$$I_1 = a \cdot f_1(x,y,t); \; I_2 = a \cdot f_2(x,y,t); \; ....$$

Selbstverständlich kann auch der lineare Faktor a zusätzlich variiert werden.

## Lösung der Aufgabe

Die Lösung der Aufgabe erfolgt dadurch, dass wenigstens zwei Teilstrahlen mit unterschiedlicher Intensitätsverteilung über dem Strahlquerschnitt (Strahlprofil) verwendet werden, welche zu einem Arbeitsstrahl zusammengeführt werden. Dieser Arbeitsstrahl wird dann zur Bearbeitung auf eine Objektoberfläche bevorzugt fokussiert gerichtet. Im Gegensatz zu herkömmlichen Verfahren unterscheidet sich nun eine erste Intensitätsverteilung $I_b = a \cdot f_b(x,y,t)$ von einer nachfolgenden $I_n = a \cdot f_n(x,y,t)$ durch den Funktionswert $f_u(x,y,t)$ und nicht mehr nur durch einen geänderten linearen Wert a. Unter x und y werden die Koordinaten einer Ebene, bevorzugt über den Strahlquerschnitt und unter t eine Zeitabhängigkeit verstanden.

Dadurch, dass die Intensität der Teilstrahlen einzeln verändert wird, erfolgt beim Zusammenführen der Strahlen nicht mehr eine lineare Änderung der Kurvenform der Intensitätsverteilung, sondern die Kurvenform als Ganzes ändert sich. Eine Änderung der Kurvenform ergibt, wie unten ausgeführt wird, beispielsweise ein unterschiedliches Bohrverhalten, je nachdem, ob die Intensität der Bearbeitungsstrahlmitte oder am Strahlrand erhöht wird.

Erfindungsgemäß werden mindestens zwei Teilstrahlen $l_1 = a_1 \cdot f_1(x,y,t)$ und $l_2 = a_2 \cdot f_2(x,y,t)$ zusammengefügt, wobei mit Schaltzeiten (Veränderungszeiten) bis zu Submikrosekunden die Faktoren $a_1$ und $a_2$ veränderbar sind. Die Zusammenfügung der beiden Strahlen $\Sigma\, l1 + l2$ ergibt dann einen Arbeitsstrahl mit einer anderen Funktion $f_3(x,y,t)$ der Intensitätsverteilung über dem Strahlquerschnitt. Es lässt sich hierdurch der "Durchmesser" des Arbeitsstrahles "schnell" steuern. Dabei ergibt sich auf einem zu bearbeitenden Werkstück nicht nur ein einstellbares Intensitäts-, sondern auch ein einstellbares bzw. vorgebbares Tiefenschärfenprofil.

Die Erfindung ist überall dort bevorzugt einzusetzen, wo Materialabtragungen benötigt werden, deren Tiefe und Breite sich räumlich schnell ändern. Ein bevorzugtes Anwendungsgebiet ist die Herstellung von Rasternäpfchen auf einem Tiefdruckzylinder. Eine Rasternäpfchenherstellung unter Verwendung von Laserstrahlung ist aus der WO 96/34718 bekannt. Bei dem bekannten Verfahren wurde jedoch eine Intensitätsverteilung verwendet, wie sie durch die Fokussierung eines einzigen Strahles erreichbar ist. Die vorteilhafte, nahezu beliebig erzeugbare Intensitätsverteilung, wie sie die Erfindung durch eine Zusammenführung mehrerer Strahlen erreicht, war der WO 96/34718 unbekannt.

Mit der unten beschriebenen erfindungsgemäßen Vorrichtung können die Teilstrahlen zu unterschiedlichen Zeitpunkten ein- und ausgeschaltet bzw. teilweise ein- und ausgeschaltet werden. D.h. es ist nicht nur eine schnelle Intensitätsvariation der Intensitätsverteilung über den Strahlquerschnitt (Strahlprofil), sondern auch eine zeitliche Variation möglich: $\Sigma\, l1 + l2 + .... = \Sigma f_{a1}(t) \cdot f_1(x,y,t) + f_{a2}(t) \cdot f_2(x,y,t) + ....$ Diese Art der Variation wird man überall dort einsetzen, wo kurzzeitige Aufwärmungseffekte (z.B. Entstehen einer Plasmawolke) von Bedeutung sind.

Eine Materialabtragung ist für die Anwendung der Erfindung nicht zwingend; ein Einsatz kann auch bei einer nichtmaterialabtragenden Laserbeschriftung sowie beim Materialhärten erfolgen. Auch können Objekte ausgeleuchtet werden (z.B. moduliertes Pumpen von Laserkristallen oder Medien). Es kann mit gepulsten und auch mit kontinuierlich arbeitenden Laserstrahlen gearbeitet werden.

**Ausführungsbeispiele der Erfindung**

Im Folgenden werden Beispiele des erfindungsgemässen Verfahrens und der erfindungsgemässen Vorrichtung anhand von Figuren näher erläutert. Weitere Vorteile der Erfindung ergeben sich aus dem nachfolgenden Beschreibungstext. Es zeigen:

Fig. 1 eine schematische Darstellung der erfindungsgemässen Vorrichtung,

Fig. 2 eine beispielsweise Intensitätsverteilung zweier zusammengeführter koaxialer Teilstrahlen,

Fig. 3 analog zu **Figur 2** Intensitätsverteilungen zusammengeführter Teilstrahlen, welche in der Zusammenführungseinrichtung nicht parallel verlaufen und damit nach einer Fokussierung sich noch vollständig (a) bzw. nur teilweise (b) überlappen sowie vollständig voneinander distanziert (c) sind und

Fig. 4 eine Anordnung mit zwei Lasern.

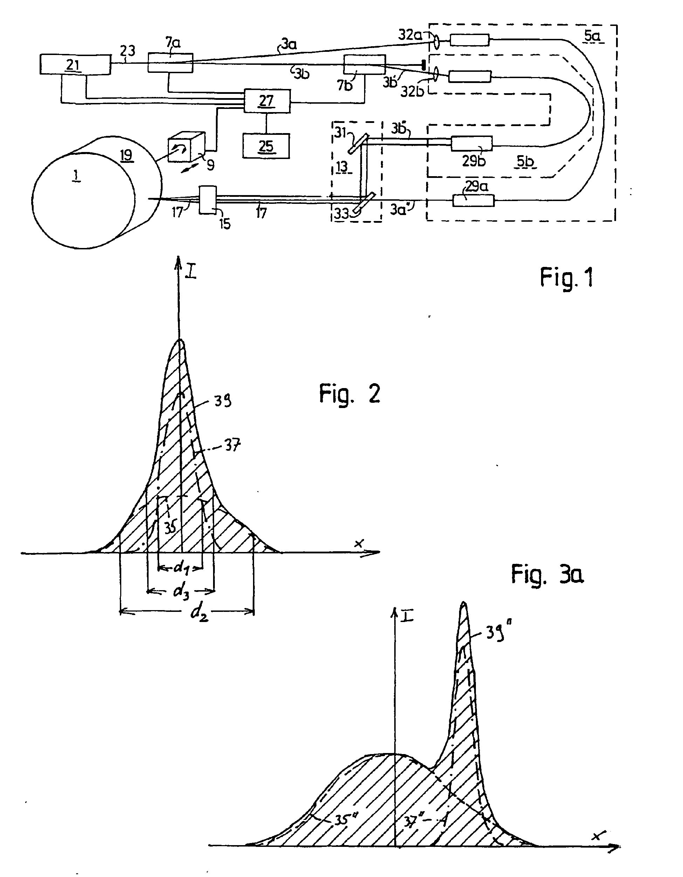

Die in **Figur 1** dargestellte erfindungsgemässe Vorrichtung wird hier beispielsweise zur Herstellung von Rasternäpfchen auf einem Tiefdruckzylinder **1** verwendet. In der Vorrichtung sind zwei Laserteilstrahlen **3a** und **3b** vorhanden, je eine Strahlprofilformungseinrichtung **5a** und **5b** für jeden Teilstrahl **3a** und **3b**, zwei Leistungseinstelleinrichtungen **7a** und **7b** für die Teilstrahlen **3a** und **3b**, eine Positioniereinrichtung **9** für ein zu bearbeitendes Werkstück **11**, nämlich den Tiefdruckzylinder, sowie eine Zusammenführungseinrichtung **13** für die beiden Teilstrahlen **3a** und **3b** und eine Fokussiereinrichtung **15** für die zum Materialbearbeitungsstrahl zusammengeführten Teilstrahlen **3a** und **3b**, um diese auf die zu bearbeitende Oberfläche **19** des Tiefdruckzylinders **1** zu fokussieren.

Ferner hat die Vorrichtung einen periodischen Q-switch Nd-YAG-Laser **21** als Strahlungsquelle. Der Laser **21** sendet einen Quellenstrahl **23** mit einer einstellbaren Repetitionsfrequenz von bis zu 70 kHz aus. Die Repetitionsfrequenz des periodischen Q-switch-Lasers **21** wird mit einem nicht dargestellten, innerhalb des Laserresonators angeordneten akusto-optischen Modulator erzeugt. Der akusto-optische Modulator innerhalb des Laserresonators, die zwei Leistungseinstelleinrichtungen **7a** und **7b**, die Positioniereinrichtung **9** und das nicht dargestellte Lasernetzgerät zum Laser **21** sind über Signalleitungen mit einer einen Speicher **25** aufweisenden Steuereinrichtung **27** elektrisch verbunden.

Der vom Laser **21** ausgehende gepulste Laserstrahl **23** wird mit einer als akusto-optischer Modulator **7a** ausgebildeten Leistungseinstelleinrichtung in die beiden Teilstrahlen **3a** und **3b** aufgeteilt. Je nach Amplitude der im Modulatorkristall angeregten akustischen Welle - es wird nur die Amplitude nicht aber die Frequenz verändert - wird die eingehende Strahlungsleistung zwischen den beiden Teilstrahlen **3a** und **3b** aufgeteilt. Eine Abstrahlung von Leistung in Teilstrahlen höherer Ordnung, d. h. unter größerem Winkel, kann vernachlässigt werden. Der Teilstrahl **3b** wird auf einen weiteren akusto-optischen Modulator **7b** als Leistungseinstelleinrichtung geführt. Von diesem Modulator wird jedoch nur ein einziger Teilstrahl **3b'** weitergeführt. D.h. die Leistung des Teilstrahls **3b'** wird gegenüber der eingekoppelten Leistung des Teilstrahls **3b** in Abhängigkeit des akustischen Modulationshubs gedämpft.

Die US-A 5 856 648 lehrte im Gegensatz zur Erfindung eine Gesamtintensitätseinstellung pro Laserpuls mittels einem akusto-optischen Modulator und eine zeitliche Ineinanderschachtelung von zwei Pulsfolgen zweier Laserstrahlen zu einem Strahl mit einer einzigen Pulsreihe mit doppelter Pulsfrequenz und ohne Pulsüberlappung. Es wurden zwei Lasergeräte verwendet, deren jeweiliger Ausgangsstrahl mit einem akusto-optischen Modulator auf eine vorzugebende Intensität gebracht und um einen festen Winkel abgelenkt wurde. Die beiden akusto-optischen Modulatoren waren derart angeordnet, dass die Strahlachse der abgelenkten Strahlen zusammen fiel. D.h. ein zweiter (in Strahlausbreitungsrichtung blickend) der beiden Modulatoren wurde in seinem ansteuerungslosen Zustand vom durch den ersten Modulator abgelenkten Strahl durchstrahlt. Die Anordnung in der US-A 5 856 648 diente dazu, die Strahlung zweier gepulster Laser derart zu vereinen, dass jeweils im strahlungslosen Zustand des einen Lasers die Strahlung des zweiten "eingeblendet" wurde. Bei der Erfindung werden jedoch im Gegensatz hierzu aus einem einzigen Laserstrahl zwei in ihrer Intensität einstellbare Strahlen gebildet. Die Lehre der US-A 5 856 648 ist gattungsfremd zu derjenigen der Erfindung.

Die Strahlprofile der beiden Teilstrahlen **3a** und **3b'** werden bei einer Einkopplung in je einen Strahlungsleiter **30a** und **30b** durch dessen Einkopplungsoptik **32a** und **32b** und dessen optisches Auskopplungssystem **29a** und **29b**, welches den ausgekoppelten Strahl kollimiert abstrahlt, unterschiedlich geformt und zwar so, dass Teilstrahl **3a** einen breiten Strahldurchmesser und Teilstrahl **3b'** einen schmalen Strahldurchmesser erhält. Die Strahlformung kann nun durch die Strahlungsleiter (Monomodefaser, Multimodefaser, Verwendung mit Fasern mit unterschiedlichem Dotierungsprofil) oder durch die an das Faserende anschließenden refraktiven oder diffraktiven optischen Systeme **29a** und **29b** zur Auskopplung, oder durch beides, erfolgen. Die mit den optischen Systemen **29a** und **29b** aus den Strahlungsleitern **30a** und **30b** ausgekoppelten Teilstrahlen **3a''** und **3b''** sind kollimiert. Die optischen Systeme **29a** und **29b** sind vorzugsweise derart ausgebildet, dass der Strahldurchmesser des Teilstrahls **3a''** bedeutend kleiner ist als derjenige des Teilstrahls **3b''**. Je nach verwendetem optischen System **29a** und **29b** ergibt sich dann auch eine unterschiedliche Tiefenschärfe jedes Teilstrahls bei der Fokussierung auf die Oberfläche **19**. Der Teilstrahl **3b''** wird mit einem Umlenkspiegel **31** um 90° auf einen Überlagerungsspiegel **33** geführt. Der Umlenkspiegel **31** und der Überlagerungsspiegel 33 bilden die Zusammenführeinrichtung **13** für die beiden Teilstrahlen **3a''** und **3b''**. Das Zusammenführen erfolgt hier geometrisch optisch (im Gegensatz zu einer "physikalischen" Vereinigung, bei der polarisierende Strahlteiler bzw. teildurchlässige Spiegel verwendet werden, was ebenfalls im Rahmen des erfindungsgemäßen Verfahrens möglich wäre, jedoch einen Leistungsverlust an die 50% nach sich ziehen würde). Zu diesem Zweck hat der Spiegel **33** ein zentrisches Loch, durch das der Teilstrahl **3a''** ungehindert hindurchtreten kann. Der Teilstrahl **3b''** wird durch die das Loch umgebende Spiegelfläche um 90° reflektierend umgelenkt. Beide Teilstrahlen **3a''** und **3b''** sind nun zum Materialbearbeitungsstrahl **17** koaxial zusammengeführt, der mit der Fokussiereinrichtung **15** auf die Oberfläche **19** des Tiefdruckzylinders **1** fokussiert wird. Durch die Fokussierung wird der schmale Teilstrahl **3a''** gemäß der in **Figur 2** gestrichelt dargestellten Intensitätsverteilungskuve 35 mit einem relativ großen Fokusdurchmesser $d_2$ und der Teilstrahl **3b''** gemäß der strichpunktierten Intensitätsverteilungskurve 37 mit einem kleinen Fokusdurchmesser $d_1$ auf der Oberfläche **19** abgebildet. Der Rand des Fokuspunktes ist durch einen Abfall der Intensität auf 1/e-ten Teil des Maximalwertes definiert. Der Teilstrahl 3a'' mit dem großen Fokusdurchmesser $d_2$ benötigt eine möglichst große Leistung. Bei der Zusammenführung der Teilstrahlen **3a''** und **3b''** sollte der Teilstrahl **3a''** mit der großen Leistung vollständig übertragen werden. Für den kleinen Fokuspunkt (nach der Fokussierung durch die Fokussiereinrichtung **15**) reicht bei der Herstellung der Rasternäpfchen bereits ein Bruchteil der im Teilstrahl **3b''** enthaltenen Leistung aus. Der für die Reflexion nicht zur Verfügung stehende Mittenbereich (Durchtrittsloch für den Strahl **3a''**) des Umlenkspiegels **33** kann deshalb vernachlässigt werden. Die gestrichelt und strichpunktiert dargestellten Intensitätsverteilungen sind nur rechnerisch ermittelt; experimentell lassen sie sich nur einzeln darstellen. Für die Materialbearbeitung, d. h. für die Erzeugung des betreffenden Rasternäpfchens ist die Intensitätsverteilung **39** in **Figur 2** der zusammengeführten Teilstrahlen **3a''** und **3b''** mit dem Fokusdurchmesser $d_3$ maßgebend.

Je nach Leistungsprofileinstellung der Teilstrahlen **3a** und **3b** lassen sich auf dem Tiefdruckzylinder **1** pro Laserpuls Näpfchen mit einem variablen Durchmesser von $10\mu m$ bis $180\mu m$ mit einer variablen Lochtiefe bis zu $50\mu m$ bei einem Aspektverhältnis (Lochtiefe zu Lochdurchmesser) von bis zu 2 herstellen. Insbesondere lassen sich bei geeigneter Ansteuerung der Modulatoren **7a** und **7b** auch rein durchmesservariable (d.h. in der Tiefe konstante) Tiefdrucknäpfchen herstellen. "Geeignet" bedeutet, dass die Leistung des Teilstrahls **3a** erniedrigt und gleichzeitig die des Teilstrahls **3b** derart erhöht wird, dass trotz abnehmendem Näpfchendurchmessers immer eine gleiche Näpfchentiefe erhalten wird. Die Steuerung der beiden Modulatore **7a** und **7b** hierzu wird experimentell ermittelt. Der erhaltene Näpfchendurchmesser wird ausgemessen. Die experimentellen Werte werden im Speicher **25** abgelegt.

Zur Herstellung der Rasternäpfchen auf dem Tiefdruckzylinder **1** werden die benötigten Rasterpunktdaten in den Speicher **25** der Steuereinrichtung eingespeichert. Die Steuereinrichtung **27** steuert nun je nach verwendetem Material des Tiefdruckzylinders **1** die Pumpleistung des Lasers **21** und dessen im Resonator befindlichen akusto-optischen Modulator. Die Ansteuerung dieses Modulators bestimmt die Repetitionsfrequenz der Pulse des Laserstrahls **23** und ergibt somit eine eindeutige Zuordnung für die Steuerung der beiden anderen akusto-optischen Modulatoren **7a** und **7b** sowie des Positionierens des Tiefdruckzylinder 1 mit der Positioniereinrichtung 9. Die akustische Welle in jedem Modulator ist im Megahertzbereich. Ein Schalten der Modulatore **7a** und **7b** ist somit im Verhältnis zur Repetitionsfrequenz des Lasers (max. 70 kHz) äußerst schnell und damit ein Einstellen der entsprechenden Leistungsdaten jedes Teilstrahls zu jedem Laserpuls möglich. Die Leistung des Teilstrahls **3a** richtet sich nach der vom Laser **21** abgegebenen Leistung und dem in den Teilstrahl **3b** übergekoppelten Leistungsanteil. Dieser übergekoppelte Leistungsanteil kann dann durch den akusto-optischen Modulator **7b** von der Steuereinrichtung **27** gesteuert verringert werden.

Je nach den eingestellten Leistungsverhältnissen ergibt sich gegenüber der Darstellung in **Figur 2** eine andere Überlagerungskurve für das Intensitätsprofil im Fokuspunkt auf der Tiefdruckzylinderoberfläche. Soll das Strahlprofil der zu überlagernden Teilstrahlen verändert werden, so sind die beiden Teilstrahlen oder auch nur einer in der Strahlprofilformungseinrichtung **5a** bzw. **5b** abzuändern. Dies kann durch eine Variation des optischen Systems (Linsensystems **29a** und **29b**) erfolgen. Auch können andere Strahlungsleiter z. B. mit einem anderen Kerndurchmesser oder einem anderen Dotierungsprofil verwendet werden.

Auf die Strahlungsleiter **30a** und **30b** kann verzichtet werden, wodurch sich eine einfachere Strahlführung lediglich durch die Linsensysteme ergibt. Die Strahlungsleiter **30a** und **30b** wurden hier verwendet, um Erschütterungen von der Positioniereinrichtung **9** vom optischen System fernhalten zu können.

Anstatt den dünnen Teilstrahl **3a''** durch ein Spiegelloch im Umlenkspiegel für den "dicken" Teilstrahl hindurchtreten zu lassen, kann eine andere Strahlzusammenführung gewählt werden, bei der in der Mitte des nun gerade verlaufenden "dicken" Teilstrahls ein kleiner Umlenkspiegel für den nun senkrecht eintreffenden "dünnen" Teilstrahl verwendet wird.

Als Vereinigungselement der beiden Strahlen kann auch eine planparallele, geneigte Platte verwendet werden. Die Platte ist beidseits mit einer antireflektierenden Beschichtung versehen und trägt lediglich in der Mitte einer ihrer Oberflächen, welche dem zu bearbeitenden Tiefdruckzylinder optisch zugewandt ist, eine reflektierende Beschichtung. Der Durchmesser der reflektierenden Beschichtung ist dem Durchmesser des dünnen Strahles angepasst. Bevorzugt wird man die Platte unter 45° zur Achse des "großen" Strahles aufstellen. Dieser Strahl durchdringt die Platte mit durch die Reflexionsbeschichtung verursachten Verlusten und einem kleinen seitlichen Versatz, hervorgerufen durch die Plattendicke und -neigung. Der "kleine" Strahl verläuft senkrecht zur Achse des "grossen" Strahles und wird durch die reflektierende Beschichtung, welche vorzugsweise die Strahlachse des grossen Strahles in ihrem Zentrum hat, parallel zur Strahlachse in den großen Strahl eingespiegelt (überlagert).

Anstelle die beiden Teilstrahlen **3a** und **3b** aus einen einzigen Laserstrahl **23** zu erzeugen, können auch die Teilstrahlen von zwei getrennten Q-switch Lasern erzeugt werden, deren interne Q-switch Modulatoren dann durch die Steuereinrichtung **27** synchronisiert werden müssten.

In **Figur 2** ist eine koaxiale Zusammenführung von zwei Teilstrahlen beispielsweise dargestellt. Anstelle der beiden Teilstrahlen **3a** und **3b** können selbstverständlich auch mehrere Teilstrahlen zu einem einzigen Materialbearbeitungsstrahl mit vorgegebenem Intensitätsverlauf zusammengefügt werden. Es kann dann eine weitere Intensitätserhöhung im Strahlzentrum oder eine Strahlverbreiterung mit einer Intensitätsanhebung in den Strahlrandgebieten erreicht werden. Weitere Strahlen können durch die Verwendung weiterer optischer Schaltelemente, wie z.B. durch die oben beschriebenen akusto-optische Modulatoren erzeugt werden.

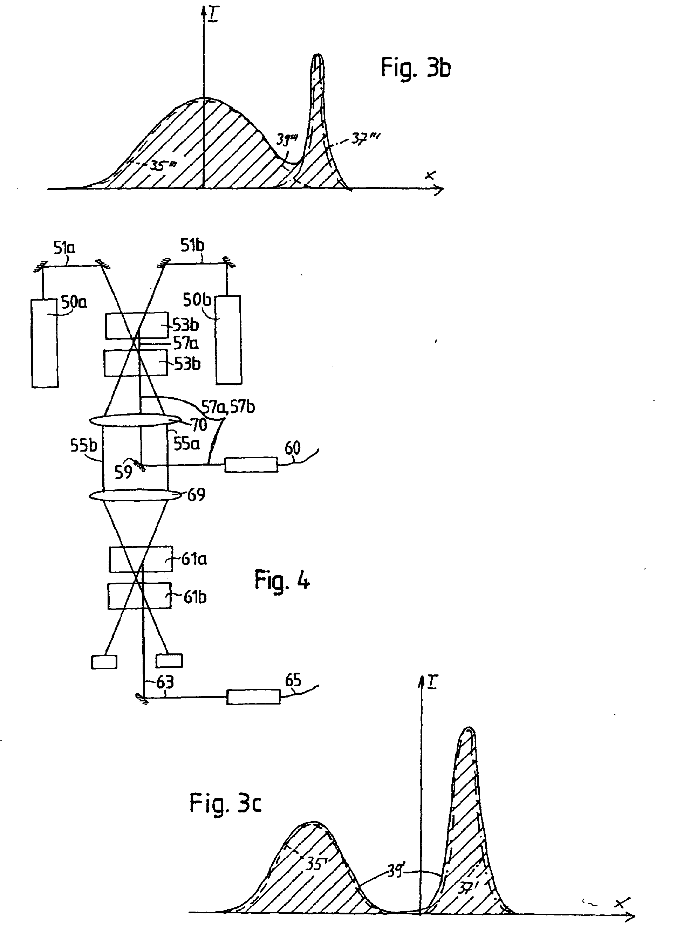

Anstelle einer koaxialen (zentrischen) Zusammenführung von Teilstrahlen kann auch eine nicht koaxiale sowie auch eine Zusammenführung von nicht parallel verlaufenden Teilstrahlen vorgenommen werden (**Figuren 3a** bis **3c**), wobei sich die fokussierten Teilstrahlen vollständig (**Figur 3a**) oder teilweise (**Figur 3b**) überlappen können bzw. vollständig voneinander getrennt (**Figur 3c**) sein können. Nicht zueinander parallele Teilstrahlen werden beispielsweise durch eine leichte Verkippung des Umlenkspiegels **31** erhalten. Anstelle eines mit beispielsweise einer Verstellschraube einstellbaren Umlenkspiegels kann auch ein sog. Galvanometerspiegel verwendet werden, der durch einen elektrischen Antrieb verstellbar ist. Eine derartige Anordnung wird man wählen, wenn Vertiefungen [Löcher oder Sacklöcher (z.B. Rasternäpfchen)] mit einem unrunden Querschnitt erzeugt werden sollen. Auch können bei völlig räumlich voneinander getrennten Teilstrahlen je nach Anzahl der Teilstrahlen mehrere Vertiefungen mit unterschiedlichem Aspektverhältnis erzeugt werden. Abhängig von der Justage der Teilstrahlen lassen sich dann z.B. Gravurraster mit kleinen Zwischenpunkten zwischen den großen Näpfchen zur Erhöhung der Druckdichte und zur Verbesserung des Farbfließverhaltens erzeugen.

Die optische Achse der oben angeführten Teilstrahlen steht immer senkrecht auf der zu bearbeitenden Fläche **19**; sie kann jedoch auch von der Senkrechten aufweichend liegen, wobei dann die optischen Achsen einzelner Teilstrahlen unterschiedliche Winkel haben können.

Anstatt die Leistung der oben beschriebenen Teilstrahlen **3a** und **3b** zur Erzeugung eines vorgegebenen, zeitlich sich ändernden Intensitätprofiles mit den Leistungseinstelleinrichtungen **7a** und **7b** zu ändern, können diese auch (zusätzlich, falls gewünscht) eine unterschiedliche, schnelle zeitliche Leistungsprofilformung vornehmen. Es kann somit auf einen hohen Initialpuls ein niedriger Leistungsverlauf folgen. Hierzu würde man bei gepulster Laserstrahlung kurz vor dem Eintreffen des aufgeteilten Pulses im Strahlverlauf **3b** den akusto-optischen Modulator **7b** vollständig für den Strahl öffnen und ihn dann innerhalb des Pulses nach einer vorgegebenen Zeit teilweise schliessen. Auch könnte der Pulsanfang reduziert werden. Im Zusammengeführten Zustand der Teilstrahlen erhält man auf diese Weise eine ortsabhängige zeitliche Variation des Intensitätsprofils.

Der Umlenkspiegel **31** kann auch als sog. adaptiver Spiegel ausgebildet sein. Mit dem Spiegel alleine kann dann das Strahlprofil des Teilstrahls **3b** schnell verändert werden.

Anstelle eines akusto-optischen Modulators (zur Strahlaufteilung bzw. Dämpfung) kann auch ein elektro-optischer Modulator (Pockelszelle) oder ein magneto-optischer Modulator (Faraday-Rotator) verwendet werden. Diese beiden letzten Schaltelemente arbeiten jedoch im Gegensatz zum akusto-optischen Schaltelement mit polarisierter Strahlung.

Zur Erzeugung eines Rasternäpfchens kann nun pro Näpfchen nur jeweils ein Laserpuls oder auch mehrere Laserpulse verwendet werden.

Anstatt das Werkstück zu verfahren, kann auch die Zusammenführeinrichtung **13** mit der Fokussiereinrichtung **15** verfahren werden, was aufgrund der Laserleistungszuführung über die Strahlungsleiter **30a** und **30b** problemlos möglich ist. Man kann jedoch auch nur den Tiefdruckzylinder drehen und axial die Zusammenführeinrichtung **13** mit der Fokussiereinrichtung **15** bewegen.

Die Laserpulsfrequenz zur Erzeugung der oben erwähnten Drucknäpfchen kann beispielsweise dadurch gezielt erhöht werden, dass nicht nur ein gepulster Laser verwendet wird, sondern mehrere. Die einzelnen, einen zeitlichen Abstand aufweisenden Pulse der Lasergeräte können dann gezielt mit einer analogen Anordnung wie sie in der US-A 5 856 648 beschrieben ist, zugeschaltet und zu einem Strahl mit vorgegebener jetzt erhöhter Pulsrate zusammengeführt werden.

In **Figur 4** ist eine Anordnung mit zwei Lasern **50a** und **50b** gezeigt. Die beiden Laser **50a** und **50b** senden gepulste Laserquellenstrahlen **51a** und **51b** aus, deren Pulse zeitlich zueinander versetzt sind. Die beiden Quellenstrahlen **51a** und **51b** werden derart umgelenkt, dass sie unter einem vorgegebenen Winkel auf zwei hintereinander angeordnete akusto-optische Modulatoren **53a** und **53b** treffen. Der vorgegebene Winkel entspricht dem Ablenkwinkel der ersten Ordnung, erzeugt bei jeweils eingeschaltetem Modulator **53a** bzw. **53b**. Sind die beiden Modulatoren **53a** und **53b** nicht eingeschaltet, so durchdringen die Strahlen **51a** und **51b** die beiden Modulatoren **53a** und **53b** in ungeänderter Richtung und laufen als Strahlen **55a** und **55b** getrennt weiter. Ist ein Modulator **53a** bzw. **53b** geschaltet, so erfolgt eine Ablenkung und entsprechend der Höhe des Modulationshubes eine entsprechende Energieeinkopplung in den abgelenkten Strahl **57a** bzw. **57b**, der zwischen den beiden Strahlen **55a** und **55b** liegt. Die beiden mit den Laserpulsen synchronisierten Modulatoren **53a** und **53b** sind derart angeordnet, dass der jeweils abgelenkte Strahl von Modulator **53a** und derjenige von **53b** ein- und dieselbe optische Achse haben. Beide Strahlen **57a** und **57b** werden mit einem kleinen Umlenkspiegel **59** umgelenkt und in eine Strahlungsleiterfaser **60** eingekoppelt. Im Strahlungsleiter **60** werden somit Strahlkomponenten der beiden Strahlen **51a** und **51b** geführt. Die Strahlen **55a** und **55b**, welche nur noch einen Teil der Strahlungsenergie der Strahlen **51a** und **51b** haben, werden auf zwei weitere Modulatoren **61** a und **61b** geführt, mit denen eine zur gerade geschilderten analoge Strahlungsvereinigung der Strahlen **55a** und **55b** zu einem Strahl **63** vorgenommen wird. Der Strahl **63** wird ebenfalls in einen Strahlungsleiter **65** eingekoppelt. Die in den Strahlungsleitern **60** und **65** geführte Strahlung kann analog zu einem Aufbau, wie ihn **Figur 1** zeigt, als Strahl **3b"** und **3a"** weiter verwendet werden.

## Patentansprüche

1. Verfahren zur Erzeugung einer vorgebbaren Intensitätsverteilung auf einer Objektoberfläche **(19)** bzw. in einem Objekt **(1),** wobei von einem Quellenstrahl **(23; 51a, 51b)** mit einem Quellenstrahlprofil eines Lasers **(21; 50a, 50b)** ausgegangen wird, aus dem Quellenstrahl **(23; 51a, 51b)** wenigstens ein erster und ein zweiter Teilstrahl **(3a, 3a", 3b, 3b', 3b")** gebildet wird, die Leistung jedes Teilstrahls **(3a, 3a", 3b, 3b', 3b")** mit vorgebbaren Schaltzeiten bis hinab zu Submikrosekunden änderbar ist, **dadurch gekennzeichnet, dass** aus dem Quellenstrahlprofil wenigstens ein erstes Strahlprofil für den ersten Teilstrahl **(3a")** und ein sich vom ersten Strahlprofil unterscheidendes zweites Strahlprofil für den zweiten Teilstrahl **(3b")** erzeugt werden, anschliessend wenigstens der erste und der zweite Teilstrahl **(3a", 3b")** überlagert und zu einem einzigen Arbeitsstrahl **(17)** vereinigt und auf die Objektoberfläche **(19)** bzw. in das Objekt **(1)** gerichtet werden, wobei der Arbeitsstrahl **(17)** ein Arbeitsstrahlprofil mit der vorgebbaren Intensitätsverteilung erhält und somit das Arbeitsstrahlprofil mit Schaltzeiten bis zu Submikrosekunden änderbar ist und sich unterscheidende Strahlprofile erzeugbar sind.

2. Verfahren nach Anspruch 1, **dadurch gekennzeichnet, dass** aus dem Quellenstrahl **(23)** ein erster und ein zweiter Teilstrahl **(3a, 3a", 3b, 3b', 3b")** mit jeweils einer bei der Teilung gesteuert vorgebbaren ersten und zweiten Teilleistung gebildet wird.

3. Verfahren nach Anspruch 1 oder 2, **dadurch gekennzeichnet, dass** die Strahlungen aller Teilstrahlen **(3a, 3a'', 3b, 3b', 3b'')** zeitlich übereinstimmend von der betreffenden Strahlungsquelle **(21)** ausgesandt und sich wenigstens räumlich teilweise überlagernd zu einem einzigen Arbeitsstrahl **(17)** vereinigt werden, der vereinigte Strahl **(17)** auf die Objektoberfläche **(19)** bzw. in das Objekt **(1)** hinein fokussiert gerichtet und der Ort im oder auf dem Objekt **(19, 1)** laufend verändert wird.

4. Verfahren nach Anspruch 3, **dadurch gekennzeichnet, dass** die Strahlüberlagerung geometrisch vorgenommen wird.

5. Verfahren nach einem der Ansprüche 1 bis 4, **dadurch gekennzeichnet, dass** der zeitliche Leistungsverlauf der Strahlung wenigstens eines Teilstrahls **(3a, 3a'', 3b, 3b', 3b'')** zeitlich mit Schaltzeiten bis hinab zu Submikrosekunden gesteuert verändert wird und die Leistung jedes Teilstrahls **(3a, 3a'', 3b, 3b', 3b'')** durch entsprechende elektrische Ansteuerung einer optischen Schalteinrichtung, wie einem elektro-optischen, akusto-optischen oder magneto-optischen Element **(7a, 7b)**, verändert und bevorzugt durch wenigstens eines dieser Elemente eine Strahlaufspaltung in die wenigstens zwei Teilstrahlen **(3a, 3a'', 3b, 3b', 3b'')** vorgenommen wird.

6. Verfahren nach einem der Ansprüche 1 bis 5, **dadurch gekennzeichnet, dass** das Strahlprofil jedes Teilstrahles **(3a, 3a'', 3b, 3b', 3b'')** vor ihrer Zusammenführung zu einem vorgegebenen Profil geformt wird, um mit einer nachfolgenden Fokussierung das vorgegebene Strahlprofil zu erhalten, das sich grundlegend von demjenigen jedes einzelnen fokussierten Strahls unterscheidet und mit Schaltzeiten bis hinab zu Submikrosekunden ohne mechanische Bewegung optischer Komponenten variiert werden kann.

7. Verfahren nach einem der Ansprüche 1 bis 6, **dadurch gekennzeichnet, dass** die sich unterscheidenden Strahlprofile durch eine Strahlformung mit einem Strahlungsleiter **(30a, 30b),** welcher als Monomodefaser, Multimodefaser, Faser mit unterschiedlichem Dotierungsprofil oder mit einem an das Faserende anschliessenden refraktiven oder diffraktiven optischen System **(29a, 29b)** zur Strahlungsauskopplung, oder durch beides, erzeugbar sind.

8. Verfahren nach einem der Ansprüche 1 bis 7, **dadurch gekennzeichnet, dass** ein erster Strahl **(23)** eines gepulsten Lasers **(21)** mit einem ersten akusto-optischen Modulator **(7a)** in einen ersten und einen zweiten Teilstrahl **(3a, 3b)** mit durch den ersten Modulator **(7a)** einstellbarer Teilleistung aufgespalten wird, der erste Teilstrahl **(3a)** auf ein vorgegebenes Strahlprofil mit einer vorgegebenen Intensitätsverteilung über seinen Querschnitt geformt, der zweite Teilstrahl **(3b)** mit einem zweiten akusto-optischen Modulator **(7b)** leistungsmoduliert und auf ein ebenfalls vorgegebenes Strahlprofil mit einer vorgegebenen Intensitätsverteilung, das bzw. die sich von dem- bzw. derjenigen des ersten Teilstrahls **(3a'')** unterscheiden kann, geformt wird, beide Teilstrahlen **(3a'', 3b'')** zu einem Materialbearbeitungsstrahl **(17)** zusammengeführt und auf die Materialoberfläche **(19)** fokussiert werden, der Ort der Strahlungsfokussierung nach jeweils einer vorgegebenen Anzahl Pulse des Lasers **(21)** verändert wird, wobei die Ortsveränderung und die Intensität des ersten und des zweiten Teilstrahls **(3a, 3a'', 3b, 3b', 3b'')** mit den beiden Modulatoren **(7a, 7b)** gesteuert derart verändert werden, dass auf der Materialoberfläche **(19)** eine Reihe von Näpfchen mit unterschiedlichen Aspektverhältnissen gebildet werden, damit eine derart bearbeitete Oberfläche **(19)**, sofern sie Teil einer Walze ist, als Tiefdruckzylinder **(1)** verwendbar ist.

9. Verfahren nach einem der Ansprüche 1 bis 8, **dadurch gekennzeichnet, dass** die Teilstrahlen **(3a'', 3b'')** als koaxiale oder als nicht-koaxiale oder als nicht parallel verlaufende Teilstrahlen zur Vereinigung zusammengeführt werden.

10. Vorrichtung zur Erzeugung einer vorgebbaren Intensitätsverteilung auf einer Objektoberfläche **(19)** bzw. in einem Objekt **(1),** wobei von einem Quellenstrahl **(23; 51a, 51b)** mit einem Quellenstrahlprofil eines Lasers **(21; 50a, 50b)** ausgegangen wird; mit wenigstens einer Strahlteilereinheit **(7a, 7b),** mit der aus dem Quellenstrahl **(23; 51a, 51b)** wenigstens ein erster und ein zweiter Teilstrahl **(3a, 3a'', 3b, 3b'')** erzeugbar ist, mit wenigstens einer mit bis hinab zu Submikrosekunden schaltenden Leistungseinstelleinrichtung **(7a, 7b)** für die Teilstrahlen **(3a, 3a'', 3b, 3b''),** mit einer Zusammenführeinheit **(13)** zum Zusammenführen der Teilstrahlen **(3a'', 3b''),** mit einer Positionier- **(9)** sowie bevorzugt einer Fokussiereinrichtung **(15), gekennzeichnet durch** wenigstens eine Strahlprofilformungseinheit **(5a, 5b),** mit der das Quellenstrahlprofil in wenigstens ein erstes Strahlprofil für den ersten Teilstrahl **(3a'')** und ein sich vom ersten Strahlprofil unterscheidendes zweites Strahlprofl für den zweiten Teilstrahl **(3b'')** änderbar ist, wobei mit der Zusammenführeinheit **(13)** aus den beiden Teilstrahlen **(3a'', 3b'')** unter einer Überlagerung der beiden Strahlprofile ein einziger Arbeitsstrahl **(17)** mit einem, mit Schaltzeiten bis zu Submikrosekunden änderbaren Arbeitsstrahlprofil mit der vorgebbaren Intensitätsverteilung bildbar ist und der Arbeitsstrahl **(17)** mit der Positioniereinrichtung **(9),** bevorzugt fokussierbar mit der Fokussiereinrichtung **(15)** auf bzw. in das Objekt **(19, 1)** führbar ist.

**11.** Vorrichtung nach Anspruch 10, **dadurch gekennzeichnet, dass** mit der Strahlteilereinheit **(7a, 7b)** gleichzeitig neben einer Strahlaufteilung des Quellenstrahls **(23)** in zwei Teilstrahlen **(3a, 3a", 3b, 3b', 3b")** auch eine Leistungsaufteilung in eine erste Teilleistung eines ersten Teilstrahls **(3a, 3a")** und eine zweite Teilleistung eines zweiten Teilstrahls **(3b, 3b', 3b")** gesteuert mit Steuerungszeiten bis hinab zu Submikrosekunden vornehmbar ist, wobei dann jeder Teilstrahl **(3a, 3a", 3b, 3b', 3b")** die erste bzw. die zweite Leistungsaufteilung **(35, 37)** hat.

**12.** Vorrichtung nach Anspruch 10 oder 11, **gekennzeichnet durch** einen gepulsten Laser als Strahlungsquelle **(21)** zur Erzeugung des wenigstens einen Quellenstrahls **(23),** einen auch als Leistungseinstelleinrichtung **(7a)** wirkenden Strahlteiler, mit dem der Quellenstrahl **(23)** in die beiden Teilstrahlen **(3a, 3b)** derart aufteilbar ist, dass jeder Teilstrahl **(3a, 3b)** pro Laserpuls eine vorgegebene Leistung hat, und eine weitere Leistungseinstelleinrichtung **(7b)** zur Leistungseinstellung der Strahlung eines der beiden Teilstrahlen **(3b).**

**13.** Vorrichtung nach Anspruch 12, **dadurch gekennzeichnet, dass** der Laser **(21)** ein periodisch gepulster Q-switch Laser ist.

**14.** Vorrichtung nach Anspruch 12 oder 13, **dadurch gekennzeichnet, dass** der auch als Leistungseinstelleinrichtung **(7a)** wirkende Strahlteiler derart ausgebildet ist, dass jeder Teilstrahl **(3a, 3b)** pro Laserpuls eine vorgebbare Leistung hat.

**15.** Vorrichtung nach einem der Ansprüche 12 bis 14, **dadurch gekennzeichnet, dass** der Strahlteiler **(7a)** als akusto-optischer oder elektro-optischer Modulator ausgebildet ist.

**16.** Vorrichtung nach einem der Ansprüche 12 bis 15, **dadurch gekennzeichnet, dass** die weitere Leistungseinstelleinrichtung **(7b)** ein weiterer akusto-optischer oder elektro-optischer Modulator ist.

**17.** Vorrichtung nach einem der Ansprüche 10 bis 16, **dadurch gekennzeichnet, dass** für die sich unterscheidenden Strahlprofile wenigstens ein Strahlungsleiter **(30a, 30b)** vorhanden ist, welcher als Monomodefaser, Multimodefaser, Faser mit unterschiedlichem Dotierungsprofil ausgebildet ist, oder wenigstens ein an das Faserende anschliessendes refraktives oder diffraktives optisches System **(29a, 29b)** zur Strahlungsauskopplung oder beides vorhanden ist.

**18.** Vorrichtung nach einem der Ansprüche 10 bis 17, **gekennzeichnet durch** eine Steuereinrichtung **(17)** mit einem Speicher **(25)**, in dem Rasterinformationen für die Bildpunkte eines Tiefdruckrasters abspeicherbar sind, einen Tiefdruckzylinder **(1)**, dessen Oberfläche **(19)** die zu bearbeitende Werkstückoberfläche ist, eine elektrische Verbindung der Steuereinrichtung **(17)** mit jeder Leistungseinstelleinrichtung **(7a, 7b)** zur Leistungssteuerung der Teilstrahlen **(3a, 3b)** für jeden Strahlungspuls, um pro zu erzeugendem Rasterpunkt auf dem Tiefdruckzylinder ein vorgebbares strahlquerschnittsmäßiges und/oder zeitliches Intensitätsprofil des Arbeitsstrahls **(17)** auf der Werkstückoberfläche **(19)** als Objektoberfläche für eine Materialabtragung mit einem vorgebbaren Aspektverhältnis zu erhalten.

## Claims

**1.** Method for producing a predeterminable intensity distribution on an object surface (19) or in an object (1), with a source beam (23; 51a, 51b) having a source beam profile of a laser (21; 50a, 50b) being taken as a basis, at least a first and a second part-beam (3a, 3a", 3b, 3b', 3b") being formed from the source beam (23; 51a, 51b), and the power of each part-beam (3a, 3a", 3b, 3b', 3b") being variable with predeterminable switching times of as low as sub-microseconds, **characterised in that** there are produced from the source beam profile at least a first beam profile for the first part-beam (3a") and a second beam profile for the second part-beam (3b") that differs from the first beam profile, subsequently at least the first and the second part-beam (3a", 3b") are superimposed and are combined to form a single operational beam (17) and are directed onto the object surface (19) or into the object (1), with the operational beam (17) receiving an operational beam profile having the predeterminable intensity distribution and consequently the operational beam profile being variable with switching times of as low as sub-microseconds and differing beam profiles being able to be produced.

**2.** Method according to claim 1, **characterised in that** a first and a second part-beam (3a, 3a", 3b, 3b', 3b") each having a first and second part-power which is predeterminable in a controlled manner during the splitting is formed from the source beam (23).

**3.** Method according to claim 1 or 2, **characterised in that** the radiations of all the part-beams (3a, 3a", 3b, 3b', 3b") are emitted by the relevant radiation source (21) in a temporally synchronised manner and are combined to form a single operational beam (17) so as to at least partially overlap each other in a spatial manner, and the combined beam (17) is directed so as to be focused onto the object surface (19) or into the object (1) and the location in or on the object (19, 1) is continuously changed.

**4.** Method according to claim 3, **characterised in that** the beam superimposition is carried out geometrically.

**5.** Method according to any one of claims 1 to 4, **characterised in that** the temporal power characteristics of the radiation of at least one part-beam (3a, 3a", 3b, 3b', 3b") are changed temporally in a controlled manner with switching times of as low as sub-microseconds and the power of each part-beam (3a, 3a", 3b, 3b', 3b") is changed by corresponding electrical control of an optical switching device, such as an electrical-optical, acoustic-optical or magnetic-optical element (7a, 7b), and beam splitting into the at least two part-beams (3a, 3a", 3b, 3b', 3b") is preferably carried out by at least one of those elements.

**6.** Method according to any one of claims 1 to 5, **characterised in that** the beam profile of each part-beam (3a, 3a'', 3b, 3b', 3b") is shaped before it is combined in order to form a predetermined profile in order to obtain, with a subsequent focusing operation, the predetermined beam profile which fundamentally differs from that of each individually focused beam and which can be varied with switching times of as low as sub-microseconds without any mechanical movement of optical components.

**7.** Method according to any one of claims 1 to 6, **characterised in that** the mutually differing beam profiles can be produced by beam shaping with a light guide (30a, 30b) which is in the form of a monomode fibre, multimode fibre, fibre having a different doping profile or with a refractive or diffractive optical system (29a, 29b), which is connected to the fibre end, in order to decouple the radiation, or both.

**8.** Method according to any one of claims 1 to 7, **characterised in that** a first beam (23) of a pulsed laser (21) is split with a first acoustic-optical modulator (7a) into a first and a second part-beam (3a, 3b) with partial power which can be adjusted by the first modulator (7a), the first part-beam (3a) is shaped into a predetermined beam profile with a predetermined intensity distribution over its cross-section, the second part-beam (3b) is shaped with a second acoustic-optical modulator (7b) in a power-modulated manner and into a beam profile which is also predetermined and which has a predetermined intensity distribution which may differ from that of the first part-beam (3a"), both part-beams (3a", 3b") are combined to form a material processing beam (17) and are focused onto the material surface (19), and the location of the radiation focusing is changed in accordance with a predetermined number of pulses of the laser (21), with the location change and the intensity of the first and second part-beam (3a, 3a", 3b, 3b', 3b") being changed in a controlled manner with the two modulators (7a, 7b) in such a manner that a series of indentations having different aspect ratios are formed on the material surface (19) so that a surface (19) processed in such a manner, if it is part of a roller, can be used as a rotogravure cylinder (1).

**9.** Method according to any one of claims 1 to 8, **characterised in that** the part-beams (3a" , 3b") are combined in the form of coaxial or non-coaxial part-beams or part-beams which extend in a non-parallel manner in order to be unified.

**10.** Device for producing a predeterminable intensity distribution on an object surface (19) or in an object (1), with a source beam (23; 51a, 51b) having a source beam profile of a laser (21; 50a, 50b) being taken as a basis, having at least one beam splitter unit (7a, 7b), with which at least a first and a second part-beam (3a, 3a", 3b, 3b") can be produced from the source beam (23; 51a, 51b), having at least one power adjustment device (7a, 7b), which switches at a level as low as sub-microseconds, for the part-beams (3a, 3a", 3b, 3b"), having a combining unit (13) for combining the part-beams (3a", 3b"), having a positioning device (9) and preferably a focusing device (15), **characterised by** at least one beam profile shaping unit (5a, 5b) with which the source beam profile can be changed into at least a first beam profile for the first part-beam (3a") and a second beam profile for the second part-beam (3b") that differs from the first beam profile, with a single operational beam (17) being able to be formed so as to have an operational beam profile, which can be changed with switching times of as low as sub-microseconds and which has the predeterminable intensity distribution, from the two part-beams (3a", 3b") with the combination unit (13) with the two beam profiles being superimposed, and with the operational beam (17) being able to be guided onto or into the object (19, 1) with the positioning device (9), preferably in a focusable manner with the focusing device (15).

**11.** Device according to claim 10, **characterised in that** it is also possible to carry out simultaneously with the beam splitter unit (7a, 7b), in addition to beamsplitting of the source beam (23) into two part-beams (3a, 3a", 3b, 3b', 3b"), power splitting into a first partial power of a first part-beam (3a, 3a") and a second partial power of a second part-beam (3b, 3b', 3b") in a controlled manner with control times of as low as sub-microseconds, each part-beam (3a, 3a", 3b, 3b', 3b") then having the first or second power splitting (35, 37).

**12.** Device according to claim 10 or 11, **characterised by** a pulsed laser as a radiation source (21) for producing the at least one source beam (23), a beam splitter which also acts as a power adjustment device (7a) and with which the source beam (23) can be split into the two part-beams (3a, 3b) in such a manner that each part-beam (3a, 3b) has a predetermined power per laser pulse, and an additional power adjustment device (7b) in order to adjust the power of the radiation of one of the two part-beams (3b).

13. Device according to claim 12, **characterised in that** the laser (21) is a periodically pulsed Q-switch laser.

14. Device according to claim 12 or 13, **characterised in that** the beam splitter, which also acts as a power adjustment device (7a), is constructed in such a manner that each part-beam (3a, 3b) has a predeterminable power per laser pulse.

15. Device according to any one of claims 12 to 14, **characterised in that** the beam splitter (7a) is in the form of an acoustic-optical or electrical-optical modulator.

16. Device according to any one of claims 12 to 15, **characterised in that** the additional power adjustment device (7b) is an additional acoustic-optical or electrical-optical modulator.

17. Device according to any one of claims 10 to 16, **characterised in that** at least one light guide (30a, 30b) is provided for the differing beam profiles and is in the form of a monomode fibre, multimode fibre, fibre having a different doping profile, or at least one refractive or diffractive optical system (29a, 29b) which is connected to the fibre end is provided in order to decouple the radiation, or both.

18. Device according to any one of claims 10 to 17, **characterised by** a control device (17) having a store (25) in which screen information for the pixels of a rotogravure screen can be stored, a rotogravure cylinder (1) whose surface (19) is the workpiece surface to be processed, an electrical connection of the control device (17) with respect to each power adjustment device (7a, 7b) in order to control the power of the part-beams (3a, 3b) for each radiation pulse in order to obtain, for each screen point on the rotogravure cylinder to be produced, an intensity profile which is predeterminable in terms of beam cross-section and/or time of the operational beam (17) on the workpiece surface (19) acting as an object surface for removal of material with a predeterminable aspect ratio.

**Revendications**

1. Procédé pour produire une répartition d'intensité spécifiable sur une surface d'objet (19) ou dans un objet (1), ce pour quoi on part d'un faisceau de source (23 ; 51a; 51b) avec un profil de faisceau de source d'un laser (21 ; 50a ; 50b), à partir du faisceau de source (23 ; 51a ; 51b) est formé au moins un premier et un second faisceau partiel (3a, 3a", 3b, 3b', 3b"), la puissance de chaque faisceau partiel (3a, 3a", 3b, 3b', 3b") est modifiable avec des durées de commutation spécifiables descendant à des valeurs inférieures aux microsecondes, **caractérisé en ce qu'**à partir du profil de faisceau de source au moins un premier profil de faisceau pour le premier faisceau partiel (3a") et un second profil de faisceau se distinguant du premier profil de faisceau pour le second faisceau partiel (3b") sont produits, ensuite au moins le premier et le second faisceaux partiels (3a", 3b") sont superposés et réunis en un unique faisceau de travail (17) et pointés sur la surface d'objet (19) ou dans l'objet (1), le faisceau de travail (17) recevant un profil de faisceau de travail avec la répartition d'intensité spécifiable et ainsi le profil de faisceau de travail étant modifié avec des durées de commutation descendant à des valeurs inférieures aux microsecondes, et des profils de faisceau distincts pouvant être produits.

2. Procédé selon la revendication 1, **caractérisé en ce que** à partir du faisceau de source (23) sont formés un premier et un second faisceau partiel (3a, 3a", 3b, 3b', 3b") avec respectivement une première et une seconde puissance partielle spécifiables de façon commandée lors de la division.

3. Procédé selon la revendication 1 ou 2, **caractérisé en ce que** les rayonnements de tous les faisceaux partiels (3a, 3a", 3b, 3b', 3b") sont émis en coïncidence temporelle depuis la source de rayonnement concernée (21) et réunis en un seul faisceau de travail (17) avec superposition au moins partielle dans l'espace, le faisceau réuni (17) est dirigé de façon focalisée sur la surface de l'objet (19) ou dans l'objet (1), et l'emplacement dans ou sur l'objet (19, 1) est modifié constamment.

4. Procédé selon la revendication 3, **caractérisé en ce que** la superposition des faisceaux est réalisée géométriquement.

5. Procédé selon l'une quelconque des revendications 1 à 4, **caractérisé en ce que** l'évolution temporelle de puissance du rayonnement d'au moins un faisceau partiel (3a, 3a", 3b, 3b', 3b") est modifiée dans le temps de façon commandée avec des durées de commutation descendant à des valeurs inférieures aux microsecondes, et la puissance de chaque faisceau partiel (3a, 3a", 3b, 3b', 3b") est modifiée par un pilotage électrique correspondant d'un dispositif de commutation optique, tel qu'un élément (7a, 7b) électro-optique, acousto-optique ou magnéto-optique, et une scission du faisceau en les au moins deux faisceaux partiels (3a, 3a", 3b, 3b', 3b") est réalisée de préférence par au moins un de ces éléments.

6. Procédé selon l'une quelconque des revendications 1 à 5, **caractérisé en ce que** le profil de faisceau de chaque faisceau partiel (3a, 3a", 3b, 3b', 3b") est formé avant leur réunion en un profil donné, afin d'obtenir avec une focalisation successive le profil de faisceau donné qui se distingue fondamentalement de celui de chaque faisceau individuel focalisé et que l'on peut faire varier avec des durées de commutation descendant à des valeurs inférieures aux microsecondes sans déplacement mécanique des composants optiques.

7. Procédé selon l'une quelconque des revendications 1 à 6, **caractérisé en ce que** les profils de faisceaux distincts peuvent être produits par une mise en forme de faisceau avec un guide de rayonnement (30a, 30b) en tant que fibres monomodales, fibres multimodales, fibres avec un profil de concentration variable du dopant ou avec un système optique (29a, 29b) réfractif ou diffractif rattaché à l'extrémité de fibre pour le découplage de rayonnement, ou par les deux.

8. Procédé selon l'une quelconque des revendications 1 à 7, **caractérisé en ce qu'**un premier faisceau (23) d'un laser pulsé (21) est scindé au moyen d'un premier modulateur acousto-optique (7a) en un premier et un second faisceaux partiels (3a, 3b) avec des puissances partielles réglables par le premier modulateur (7a), le premier faisceau partiel (3a) est formé sur un profil de faisceau donné avec une répartition d'intensité donnée sur sa section transversale, le second faisceau partiel (3b) est modulé en puissance au moyen d'un second modulateur acousto-optique (7b) et est formé sur un profil de faisceau également donné avec une répartition d'intensité donnée qui peut se distinguer de celle/celles du premier faisceau partiel (3a"), les deux faisceaux partiels (3a'', 3b") sont réunis pour former un faisceau de traitement de matière (17) et sont focalisés sur la surface de matière (19), l'emplacement de focalisation de rayonnement est modifié chaque fois après un nombre prédéterminé d'impulsions du laser (21), la modification de l'emplacement et l'intensité du premier et du second faisceaux partiels (3a, 3a", 3b, 3b', 3b") étant modifiées de façon commandée au moyen des deux modulateurs (7a, 7b) de telle sorte qu'une série de cuvettes de différents rapports d'aspect soient formées sur la surface de matière (19) afin qu'une surface (19) traitée de cette manière, dans la mesure où elle fait partie d'un cylindre, soit utilisable en tant que cylindre d'héliogravure (1).

9. Procédé selon l'une quelconque des revendications 1 à 8, **caractérisé en ce que** les faisceaux partiels (3a", 3b") sont regroupés pour la réunification en tant que faisceau partiel coaxial ou non coaxial ou s'étendant non parallèlement.

10. Dispositif pour produire une répartition d'intensité spécifiable sur une surface d'objet (19) ou dans un objet (1), ce pour quoi on part d'un faisceau de source (23 ; 51a ; 51b) avec un profil de faisceau de source d'un laser (21 ; 50a ; 50b) ; avec au moins une unité de division de faisceau (7a, 7b) avec laquelle à partir du faisceau de source (23 ; 51a ; 51b) peut être produit au moins un premier et un second faisceaux partiels (3a, 3a", 3b, 3b', 3b"), avec au moins un dispositif de réglage de puissance (7a, 7b) commutant à une vitesse descendant à des valeurs inférieures aux microsecondes pour les faisceaux partiels (3a, 3a", 3b, 3b"), avec une unité de réunion (13) pour réunir les faisceaux partiels (3a", 3b"), avec un dispositif de positionnement (9) et de préférence un dispositif de focalisation (15), **caractérisé par** au moins une unité de mise en forme de profil de faisceau (5a, 5b), avec laquelle le profil de faisceau de source est modifiable en au moins un premier profil de faisceau pour le premier faisceau partiel (3a") et un second profil de faisceau se distinguant du premier profil de faisceau pour le second faisceau partiel (3b"), un unique faisceau de travail (17) pouvant être formé, avec l'unité de réunion (13) à partir des deux faisceaux partiels (3a", 3b") avec une superposition des deux profils de faisceau, avec un profil de faisceau de travail modifiable avec des durées de commutation descendant à des valeurs inférieures aux microsecondes avec la répartition d'intensité spécifiable et le faisceau de travail (17) pouvant être guidé avec le dispositif de positionnement (9), de préférence focalisé avec le dispositif de focalisation (15) sur ou dans l'objet (19, 1).

11. Dispositif selon la revendication 10, **caractérisé en ce qu'**avec le dispositif diviseur de faisceau (7a, 7b) simultanément à une répartition de faisceau du faisceau de source (23) en deux faisceaux partiels (3a, 3a", 3b, 3b', 3b"), une répartition de puissance en une première puissance partielle d'un premier faisceau partiel (3a, 3a") et en une seconde puissance partielle d'un second faisceau partiel (3b, 3b', 3b") peut également être entreprise de façon commandée avec des temps de commande descendant à des valeurs inférieures aux microsecondes, chaque faisceau partiel (3a, 3a", 3b, 3b', 3b") ayant alors la première ou la seconde répartition de puissance (35, 37).

12. Dispositif selon la revendication 10 ou 11, **caractérisé par** un laser pulsé en tant que source de rayonnement (21) pour la production d'au moins un faisceau de source (23), un diviseur de faisceau agissant également en tant que dispositif de réglage de puissance (7a) et avec lequel le faisceau de source (23) peut être réparti dans les deux faisceaux partiels (3a, 3b) de telle sorte que chaque faisceau partiel (3a, 3b) aie une puissance donnée par impulsion laser, et un autre dispositif de réglage de puissance (7b) en vue du réglage de puissance du rayonnement d'un des deux faisceaux partiels (3b).

13. Dispositif selon la revendication 12, **caractérisé en ce que** le laser (21) est un laser « Q-switch » pulsé périodiquement.

14. Dispositif selon la revendication 12 ou 13, **caractérisé en ce que** le diviseur de faisceau agissant également en tant que dispositif de réglage de puissance (7a) est conçu de telle sorte que chaque faisceau partiel (3a, 3b) aie une puissance spécifiable par impulsion laser.

15. Dispositif selon l'une quelconque des revendications 12 à 14, **caractérisé en ce que** le diviseur de faisceau (7a) est conçu comme modulateur acousto-optique ou électro-optique.

16. Dispositif selon l'une quelconque des revendications 12 à 15, **caractérisé en ce que** l'autre dispositif de réglage de puissance (7b) est un autre modulateur acousto-optique ou électro-optique.

17. Dispositif selon l'une quelconque des revendications 10 à 16, **caractérisé en ce que** pour les profils de faisceau distincts il est prévu au moins un guide de rayonnement (30a, 30b) qui est constitué en tant que fibre monomodale, fibre multimodale, fibre avec un profil de concentration variable du dopant, ou au moins un système optique (29a, 29b) réfractif ou diffractif rattaché à l'extrémité de fibre pour le découplage de rayonnement ou les deux.

18. Dispositif selon l'une quelconque des revendications 10 à 17, **caractérisé par** un dispositif de commande (17) comportant une mémoire (25) dans laquelle peuvent être mémorisées des informations de trame pour les points d'image d'une trame d'héliogravure, un cylindre d'héliogravure (1) dont la surface (19) est la surface de l'objet à traiter, une connexion électrique du dispositif de commande (17) avec chaque dispositif de réglage de puissance (7a, 7b) pour commander en puissance les faisceaux partiels (3a, 3b) pour chaque impulsion de rayonnement, afin d'obtenir par point de trame à générer sur le cylindre d'héliogravure un profil d'intensité spécifiable sur la section du faisceau et/ou dans le temps du faisceau de travail (17) sur la surface de l'objet à traiter (19) en tant que surface d'objet pour un enlèvement de matière avec un rapport d'aspect spécifiable .

Fig. 1

Fig. 2

Fig. 3a

Fig. 3b

Fig. 4

Fig. 3c

**IN DER BESCHREIBUNG AUFGEFÜHRTE DOKUMENTE**

**In der Beschreibung aufgeführte Patentdokumente**

- EP 0308512 A1
- EP 0338816 A2
- WO 9634718 A
- US 5856648 A